(19) Europäisches Patentamt
European Patent Office
Office européen des brevets

(11) **EP 2 179 168 B1**

(12) **FASCICULE DE BREVET EUROPEEN**

(45) Date de publication et mention de la délivrance du brevet:
**05.04.2017 Bulletin 2017/14**

(21) Numéro de dépôt: **08806077.7**

(22) Date de dépôt: **25.06.2008**

(51) Int Cl.:
***F02M 35/112*** *(2006.01)*

(86) Numéro de dépôt international:
**PCT/FR2008/051145**

(87) Numéro de publication internationale:
**WO 2009/019350 (12.02.2009 Gazette 2009/07)**

(54) **REPARTITEUR D'ADMISSION D'UN MOTEUR A COMBUSTION INTERNE**

LUFTANSAUGKRÜMMER EINER BRENNKRAFTMASCHINE

INTERNAL COMBUSTION ENGINE INLET MANIFOLD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **03.08.2007 FR 0705693**

(43) Date de publication de la demande:
**28.04.2010 Bulletin 2010/17**

(73) Titulaire: **Renault S.A.S.**
**92100 Boulogne-Billancourt (FR)**

(72) Inventeurs:
• **MAMY, Laurence**
**F-92500 Rueil-Mailmaison (FR)**
• **RODRIGUEZ, Samuel**
**F-75013 Paris (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
**EP-A- 1 283 353        DE-A1- 19 801 204**
**FR-A- 2 879 262        JP-A- 10 047 175**
**JP-A- 2003 074 357**

**Description**

La présente invention concerne le domaine des moteurs à combustion interne de véhicules automobiles, et propose en particulier un répartiteur d'admission.

De façon connue, le répartiteur d'admission d'un moteur à combustion interne a pour fonction de répartir un flux d'admission sur l'ensemble des cylindres du moteur. Ce flux d'admission provient soit directement de l'extérieur, après un simple filtrage, c'est alors de l'air, soit d'un mélange air frais et de gaz d'échappement, dosé dans ce cas par une vanne EGR. Le répartiteur d'admission d'un moteur à combustion interne doit être suffisamment perméable pour assurer la performance du moteur à combustion interne. Un certain niveau de perméabilité est donc à atteindre. Ce niveau de perméabilité est obtenu en faisant la moyenne des perméabilités sur l'ensemble des branches associées aux différents cylindres du moteur lorsqu'une branche est débitante. Toutefois, chaque branche se doit d'avoir une perméabilité proche de celles des autres branches afin de ne pas favoriser ou défavoriser un cylindre par rapport aux autres ce qui induirait des dysfonctionnements au niveau du moteur à combustion interne ou imposerait des réglages dégradés pour le moteur à combustion interne.

Pour les moteurs à combustion interne, il est connu que les constructeurs automobiles cherchent à générer un mouvement aérodynamique de type tumble (mouvement tourbillonnaire hélicoïdal du flux d'admission dans le cylindre du moteur et dont l'axe de rotation est perpendiculaire à l'axe du cylindre). Ce mouvement principalement créé par la forme des conduits d'admission du moteur à combustion interne consiste à privilégier l'écoulement sur l'avant des soupapes d'admission ce qui correspond à un tumble dit « conventionnel » ou sur l'arrière des soupapes d'admission ce qui correspond à un tumble dit « inverse ». Il convient alors de s'assurer que la géométrie du répartiteur d'admission ne fasse pas chuter ce niveau de tumble et ne crée pas de dispersion du mouvement de type tumble. Cela peut se produire notamment lorsque la répartition de débit du flux d'admission en sortie des différents conduits ou branches du répartiteur d'admission devient suffisamment inhomogène et perturbent la répartition de la vitesse recherchée pour le flux d'admission autour des soupapes d'admission.

Les solutions actuelles proposent des répartiteurs d'admission constitués d'un conduit d'entrée du flux d'admission, le conduit d'entrée étant ouvert à une extrémité pour permettre le passage du flux d'admission et fermé à l'autre extrémité et débouchant sur sa surface latérale sur une pluralité de conduits de sortie identiques d'axe de symétrie perpendiculaire à l'axe de symétrie du conduit d'entrée et parallèle entre eux, chaque conduit de sortie étant relié à un cylindre du moteur. De cette façon, le conduit d'entrée du répartiteur d'admission permet de répartir le flux d'admission dans les différents cylindres du moteur. Mais, le conduit de sortie le plus éloigné de l'entrée du flux d'admission dans le conduit d'entrée est défavorisé en termes de perméabilité par rapport aux autres conduits de sortie plus proches de cette entrée. En effet, la distance à parcourir pour le flux d'admission est plus longue.

Il est également connu, par le document JP 11350963 et par le document JP 63208616, des répartiteurs d'admission permettant d'améliorer les performances d'un moteur et d'assurer une bonne répartition du swirl (mouvement hélicoïdal du flux d'admission dans le cylindre du moteur et dont l'axe de rotation est parallèle à l'axe du cylindre) au moyen d'ajouts de bosses, tremplins ou matières dans les branches associées aux cylindres. Mais ces ajouts impactent fortement la perméabilité des différentes branches associés aux différents cylindres.

Autres exemples de répartiteurs d'admission pour moteurs à combustion interne sont connus par: DE 198 01 204 A, JP 10 047 175 A et EP 1 283 353 A1. présente invention a pour but de pallier les inconvénients de l'art antérieur en proposant un répartiteur d'admission pour moteur à combustion interne permettant d'assurer une performance satisfaisante du moteur.

Pour atteindre ce but, le répartiteur d'admission pour moteur à combustion interne comprenant un conduit d'entrée de forme cylindrique et d'axe de symétrie ($\Delta$), le conduit d'entrée étant ouvert à une extrémité et fermé à l'autre extrémité et débouchant sur sa surface latérale sur une pluralité de conduits de sortie d'axe de symétrie ($\delta i$), l'extrémité ouverte permettant le passage d'un flux d'admission qui se déplace dans le conduit d'entrée selon l'axe de symétrie ($\Delta$) de l'extrémité ouverte vers l'extrémité fermée proche du dernier conduit de sortie, chaque conduit de sortie étant relié à un cylindre du moteur et l'axe de symétrie ($\delta i$) de chaque conduit de sortie étant perpendiculaire à l'axe de symétrie ($\Delta$) du conduit d'entrée, est caractérisé en ce que chaque conduit de sortie est raccordé par un rayon de raccordement au conduit d'entrée, de façon opposée au sens de déplacement du flux d'admission et de façon à ce que le rayon de raccordement de chaque conduit de sortie augmente en fonction de la longueur de parcours du flux d'admission de l'extrémité ouverte du conduit d'entrée à l'axe de symétrie ($\delta i$) du conduit de sortie respectif pour répartir avec une perméabilité équivalente le flux d'admission dans chaque conduit de sortie.

Selon une autre particularité, le rayon de raccordement ($R_i$) pour chaque conduit de sortie est obtenu par la formule suivante :

$$Ri = A*Li + B$$

$R_i$ et $L_i$ étant exprimés en millimètres ;
$L_i$ correspondant à la longueur de parcours du flux d'admission de l'extrémité ouverte du conduit d'entrée à l'axe de symétrie ($\delta i$) du conduit de sortie respectif;

A étant un coefficient compris entre 0,01 et 0,06 et B étant un coefficient compris entre 8 et 11 millimètres.

Selon une autre particularité, les conduits de sortie ont un diamètre identique.

Selon une autre particularité, le rayon de raccordement de chaque conduit de sortie est prévu également pour favoriser le mouvement aérodynamique de type tumble dans chaque cylindre du moteur.

Selon une autre particularité, le répartiteur d'admission s'applique pour des moteurs à combustion interne de type essence ou de type diesel.

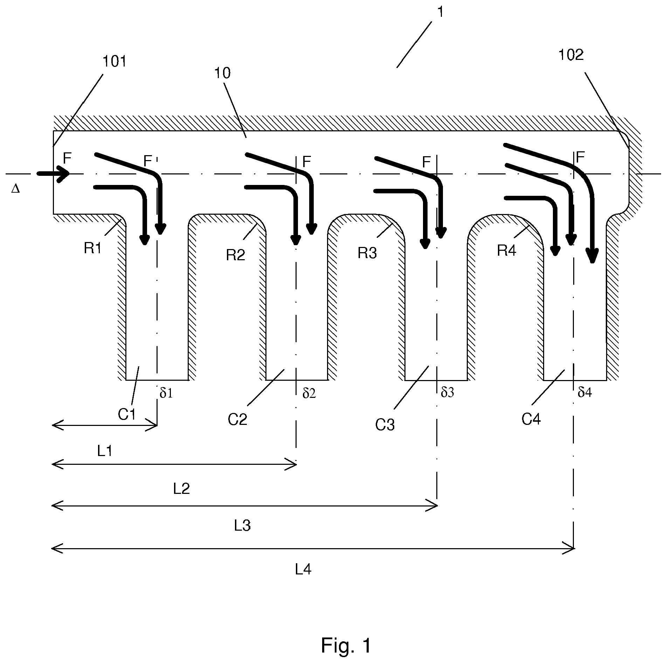

L'invention sera mieux comprise et d'autres buts, caractéristiques, détails et avantages de celle-ci apparaîtront plus clairement au cours de la description explicative qui va suivre faite en référence à l'unique figure annexée donnée à titre d'exemple non limitatif, cette figure 1 illustrant le répartiteur d'admission selon l'invention.

Le répartiteur d'admission (1) selon l'invention permet d'améliorer considérablement les performances d'un moteur à combustion interne de type essence ou diesel. Par ailleurs, les constructeurs automobiles cherchent à générer un mouvement aérodynamique de type tumble (mouvement tourbillonnaire hélicoïdal d'un flux d'admission (F) dans le cylindre du moteur et dont l'axe de rotation est perpendiculaire à l'axe du cylindre). Le répartiteur d'admission (1) selon l'invention permet de diminuer l'effet négatif que peut avoir les répartiteurs d'admission de l'art antérieur sur le mouvement aérodynamique de type tumble voire même de favoriser ce mouvement aérodynamique de type tumble.

En référence à la figure 1, le répartiteur d'admission (1) pour moteur à combustion interne comprend un conduit d'entrée (10) de forme cylindrique et d'axe de symétrie ($\Delta$). Le conduit d'entrée (10) est ouvert à une extrémité (101) et fermé à l'autre extrémité (102) et débouche sur sa surface latérale sur une pluralité de conduits de sortie (Ci) d'axe de symétrie ($\delta i$). L'axe de symétrie ($\delta i$) de chaque conduit de sortie (Ci) est perpendiculaire à l'axe de symétrie ($\Delta$) du conduit d'entrée (10) et les axes de symétrie ($\delta i$) de chaque conduit de sortie (Ci) sont parallèles entre eux. Dans l'exemple représenté, le conduit d'entrée (10) débouche sur quatre conduits de sortie (C1, C2, C3, C4) d'axe de symétrie respectif ($\delta 1$, $\delta 2$, $\delta 3$, $\delta 4$) distant d'une longueur respective (L1, L2, L3, L4) de l'extrémité ouverte (101) du conduit d'entrée (10).

L'extrémité ouverte (101) permet le passage d'un flux d'admission (F) issu de la ligne d'admission du moteur, ce flux d'admission (F) se déplaçant dans le conduit d'entrée (10) selon l'axe de symétrie ($\Delta$) de l'extrémité ouverte (101) vers l'extrémité fermée (102) proche du dernier conduit de sortie, dans l'exemple représenté du conduit de sortie (C4). Il est connu que chaque conduit de sortie (Ci) est relié à un cylindre du moteur. Dans l'exemple représenté, les conduits de sortie (C1, C2, C3, C4) sont de forme cylindrique et de diamètre identique.

Chaque conduit de sortie (Ci) est raccordé par un rayon de raccordement au conduit d'entrée (10) de façon opposée au sens de déplacement du flux d'admission (F). Le rayon de raccordement (Ri) de chaque conduit de sortie (Ci) augmente en fonction de la longueur (Li) de parcours du flux d'admission (F) de l'extrémité ouverte (101) du conduit d'entrée (10) à l'axe de symétrie ($\delta i$) du conduit de sortie (Ci) respectif pour répartir avec une perméabilité équivalente le flux d'admission (F) dans chaque conduit de sortie (Ci), le flux d'admission (F) se déplaçant dans chaque conduit de sortie (Ci) selon un axe parallèle à l'axe de symétrie ($\delta i$). Le rayon de raccordement (Ri) pour chaque conduit de sortie (Ci) est obtenu par la formule suivante :

$$Ri = A*Li + B$$

où Ri et Li sont exprimés en millimètres.

Li correspond à la longueur de parcours du flux d'admission (F) de l'extrémité ouverte (101) du conduit d'entrée (10) à l'axe de symétrie ($\delta i$) du conduit de sortie (Ci) respectif, A est un coefficient compris entre 0,01 et 0,06 et B est un coefficient compris entre 8 et 11 millimètres.

Dans l'exemple représenté, le rayon de raccordement (R1) du conduit de sortie (C1) est obtenu suivant le formule R1 = A* L1 + 10, L1 étant la longueur de parcours du flux d'admission (F) de l'extrémité ouverte (101) du conduit d'entrée (10) à l'axe de symétrie ($\delta i$) du conduit de sortie (C1). Ainsi, comme le conduit de sortie C1 est le plus proche de l'extrémité ouverte (101) du conduit d'entrée (10), son rayon de raccordement (R1) est le plus petit. Et comme le conduit de sortie C4 est le plus éloigné de l'extrémité ouverte (101) du conduit d'entrée (10), son rayon de raccordement (R4) est le plus grand.

L'augmentation du rayon de raccordement (Ri) en fonction de la longueur (Li) de parcours du flux d'admission (F) de l'extrémité ouverte (101) du conduit d'entrée (10) à l'axe de symétrie ($\delta i$) du conduit de sortie (Ci) respectif permet de favoriser le passage du flux d'admission (F) dans les conduits de sortie les plus éloignés, dans l'exemple représenté le conduit de sortie (C4).

De cette façon, le répartiteur d'admission (1) selon l'invention permet de compenser la dégradation de perméabilité que rencontrent les conduits de sortie les plus éloignés de l'extrémité ouverte (101) du conduit d'entrée (10) tout en conservant une bonne répartition des vitesses dans chaque conduit de sortie (Ci) afin de ne pas induire de dispersion qui pourrait être préjudiciable au mouvement aérodynamique de type tumble.

Un des avantages de l'invention est que le répartiteur d'admission (1) permet d'assurer une perméabilité équivalente pour chaque conduit (Ci) tout en favorisant le mouvement aérodynamique de type tumble.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Répartiteur d'admission (1) pour moteur à combustion interne comprenant un conduit d'entrée (10) de forme cylindrique et d'axe de symétrie ($\Delta$), le conduit d'entrée (10) étant ouvert à une extrémité (101) et fermé à l'autre extrémité (102) et débouchant sur sa surface latérale sur une pluralité de conduits de sortie (Ci) d'axe de symétrie ($\delta$i), l'extrémité ouverte (101) permettant le passage d'un flux d'admission (F) qui se déplace dans le conduit d'entrée (10) selon l'axe de symétrie ($\Delta$) de l'extrémité ouverte (101) vers l'extrémité fermée (102) proche du dernier conduit de sortie, chaque conduit de sortie (Ci) étant relié à un cylindre du moteur et l'axe de symétrie ($\delta$i) de chaque conduit de sortie (Ci) étant perpendiculaire à l'axe de symétrie ($\Delta$) du conduit d'entrée (10), **caractérisé en ce que** chaque conduit de sortie (Ci) est raccordé par un rayon de raccordement (Ri) au conduit d'entrée (10), de façon opposé au sens de déplacement du flux d'admission (F) et de façon à ce que le rayon de raccordement (Ri) de chaque conduit de sortie (Ci) augmente en fonction de la longueur (Li) de parcours du flux d'admission (F) de l'extrémité ouverte (101) du conduit d'entrée (10) à l'axe de symétrie ($\delta$i) du conduit de sortie (Ci) respectif pour répartir avec une perméabilité équivalente le flux d'admission (F) dans chaque conduit de sortie (Ci).

2. Répartiteur d'admission (1) selon la revendication 1, **caractérisé en ce que** le rayon de raccordement (Ri) pour chaque conduit de sortie (Ci) est obtenu par la formule suivante :

$$Ri = A{*}Li + B$$

Ri et Li étant exprimés en millimètres ;
Li correspondant à la longueur de parcours du flux d'admission (F) de l'extrémité ouverte (101) du conduit d'entrée (10) à l'axe de symétrie ($\delta$i) du conduit de sortie (Ci) respectif ; et
A étant un coefficient compris entre 0,01 et 0,06 et B est un coefficient compris entre 8 et 11 millimètres.

3. Répartiteur d'admission (1) selon la revendication 1 ou 2, **caractérisé en ce que** les conduits de sortie (Ci) ont un diamètre identique.

4. Répartiteur d'admission (1) selon une des revendications 1 à 3, **caractérisé en ce que** le rayon de raccordement (Ri) de chaque conduit de sortie (Ci) est prévu également pour favoriser le mouvement aérodynamique de type tumble dans chaque cylindre du moteur.

5. Répartiteur d'admission (1) selon une des revendications 1 à 4, **caractérisé en ce que** le répartiteur d'admission (1) s'applique pour des moteurs à combustion interne de type essence ou de type diesel.

## Patentansprüche

1. Luftansaugkrümmer (1) für einen Verbrennungsmotor, aufweisend einen Eintrittskanal (10) in zylindrischer Form und mit einer Symmetrieachse ($\Delta$), wobei der Eintrittskanal (10) an einem Ende (101) geöffnet und an dem anderen Ende (102) geschlossen ist und über eine Vielzahl von Austrittskanälen (Ci) auf einer seitlichen Fläche der Symmetrieachse ($\delta$i) mündet, wobei das offene Ende (101) den Durchlass eines Ansaugstroms (F) ermöglicht, welcher sich in dem Eintrittskanal (10) gemäß der Symmetrieachse ($\Delta$) vom geschlossenen Ende (101) in Richtung auf das nahe zum letzten Austrittskanal gelegene, geschlossene Ende (102) bewegt, wobei jeder Austrittskanal (Ci) mit einem Zylinder des Motors verbunden ist und die Symmetrieachse ($\delta$i) jedes Austrittskanals (Ci) senkrecht zur Symmetrieachse ($\Delta$) des Eintrittskanals (10) ist, **dadurch gekennzeichnet, dass** jeder Austrittskanal (Ci) über einen Verbindungsradius (Ri) mit dem Eintrittskanal (10) auf der Bewegungsrichtung des Ansaugstroms (F) entgegengesetzte Weise und derartig verbunden ist, dass der Verbindungsradius (Ri) eines jeden Austrittskanals (Ci) mit der Länge (Li) der Strecke des Ansaugstroms (F) vom offenen Ende (101) des Eintrittskanals (10) zur Symmetrieachse ($\delta$i) des jeweiligen Austrittskanals (Ci) zunimmt, um den Ansaugstrom (F) mit gleicher Durchlässigkeit auf jeden Austrittskanal (Ci) zu verteilen.

2. Luftansaugkrümmer (1) nach Anspruch 1, **dadurch gekennzeichnet, dass** der Verbindungsradius (Ri) für jeden Austrittskanal (Ci) durch die folgende Formel erzielt wird:

$$Ri = A{*}Li + B$$

wobei Ri und Li in Millimetern ausgedrückt sind;

wobei Li der Länge der Strecke des Ansaugstroms (F) vom offenen Ende (101) des Eintrittskanals (10) zur Symmetrieachse ($\delta$i) des jeweiligen Austrittskanals (Ci) entspricht; und

wobei A ein Koeffizient ist, welcher zwischen 0,01 und 0,06 liegt, und B ein Koeffizient ist, welcher zwischen 8 und 11 Millimeter liegt.

**3.** Luftansaugkrümmer (1) nach Anspruch 1 oder 2, **dadurch gekennzeichnet, dass** die Austrittskanäle (Ci) einen gleichen Durchmesser besitzen.

**4.** Luftansaugkrümmer (1) nach einem der Ansprüche 1 bis 3, **dadurch gekennzeichnet, dass** der Verbindungsradius (Ri) eines jeden Austrittskanals (Ci) ebenfalls dafür vorgesehen ist, um die aerodynamische Fallbewegung in jeden Zylinder des Motors zu begünstigen.

**5.** Luftansaugkrümmer (1) nach einem der Ansprüche 1 bis 4, **dadurch gekennzeichnet, dass** der Luftansaugkrümmer (1) bei Verbrennungsmotoren mit Benzin oder mit Diesel zum Einsatz kommt.

**Claims**

**1.** Inlet manifold (1) for an internal combustion engine, comprising an inlet duct (10) of cylindrical shape and with axis of symmetry ($\Delta$), the inlet duct (10) being open at one end (101) and closed at the other end (102) and opening on its lateral surface onto a plurality of outlet ducts (Ci) of axis of symmetry ($\delta$i), the open end (101) allowing through an inlet flow (F) which travels along the inlet duct (10) along the axis of symmetry ($\Delta$) from the open end (101) to the closed end (102) near the last outlet duct, each outlet duct (Ci) being connected to one cylinder of the engine, and the axis of symmetry ($\delta$i) of each outlet duct (Ci) being perpendicular to the axis of symmetry ($\Delta$) of the inlet duct (10), **characterized in that** each outlet duct (Ci) is connected by a blend radius (Ri) to the inlet duct (10) in a way opposite to the direction of travel of the inlet flow (F) and in such a way that the blend radius (Ri) of each outlet duct (Ci) increases with the length (Li) of the path of the inlet flow (F) from the open end (101) of the inlet duct (10) to the axis of symmetry ($\delta$i) of the respective outlet duct (Ci) in order to distribute the inlet flow (F) to each outlet duct (Ci) with equivalent permeability.

**2.** Inlet manifold (1) according to Claim 1, **characterized in that** the blend radius (Ri) for each outlet duct (Ci) is obtained from the following formula:

$$Ri = A \times Li + B$$

Ri and Li being expressed in millimeters; Li corresponding to the length of the path of the inlet flow (F) from the open end (101) of the inlet duct (10) to the axis of symmetry ($\delta$i) of the respective outlet duct (Ci); and

A being a coefficient ranging between 0.01 and 0.06 and B is a coefficient ranging between 8 and 11 millimeters.

**3.** Inlet manifold (1) according to Claim 1 or 2, **characterized in that** the outlet ducts (Ci) have identical diameters.

**4.** Inlet manifold (1) according to one of Claims 1 to 3, **characterized in that** the blend radius (Ri) of each outlet duct (Ci) is also intended to encourage a tumble-type aerodynamic movement within each cylinder of the engine.

**5.** Inlet manifold (1) according to one of Claims 1 to 4, **characterized in that** the inlet manifold (1) applies to internal combustion engines of the gasoline type or of the diesel type.

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11350963 B
- JP 63208616 B
- DE 19801204 A
- JP 10047175 A
- EP 1283353 A1